# EUROPÄISCHE PATENTANMELDUNG

(11) **EP 1 319 552 A2**
(43) Veröffentlichungstag der Anmeldung: **18.06.2003**
(21) Anmeldenummer: 02023514.9
(22) Anmeldetag: 22.10.2002
(51) Int. Cl.: B60N 3/10

(54) **Halterung für Hohlgefässe, insbesondere von Getränkebehältern**

(30) Priorität: 12.12.2001 DE 10161122
(71) Anmelder: Preh-Werke GmbH & Co. KG, 97616 Bad Neustadt a.d. Saale (DE)
(72) Erfinder: Then, Gebhard, 97616 Bad Neustadt (DE); Schultheis, Thilo, 97616 Salz (DE)
(74) Vertreter: Dietrich, Barbara

(57) **Zusammenfassung**

Halterungen (1) für einen Getränkebehälter (20) weisen Haltebacken (6) bzw. Klemmnasen auf, die Halteflächen mit unterschiedlichen radialen Abständen zu einer Mitte der Behälteraufnahme besitzen. Derartige Haltebacken (6) bestehen bekanntlich aus einem thermoplastischen Kunststoff.

Nachteilig bei derartigen Haltern ist, daß diese die Gefäße insbesondere bei extremen Bewegungen eines Fahrzeuges, wie Rüttelstrecke oder enge Kurvenfahrten, nicht immer sicher halten können.

Aus der Überlegung heraus, daß ein Fahrzeug einen Behälter (20) insbesondere während der Fahrt schieben, drücken, heben nicht aber drehen kann, schlägt die vorliegende Lösung vor, die Entnahme eines Gefäßes bzw. Getränkebehälters (20) aus der Halterung (1) durch Drehung des Gefäßes (20) um eine vertikale Achse vorzunehmen, wobei Teile (8) der Klemmnasen (6) der Halterung (1) zur Entnahme des Gefäßes gegenüber dem Gefäß (20) verdreht werden. Dazu weisen die Klemmnasen (6) ein in den Klemmnasen (6) integriertes, verdrehbares Kunststoff- oder aus ähnlichem Material bestehendes Teil (8) auf, welches in einer axialer Lagerung (9) der Klemmnase (6) eingeschnappt ist. Das Teil (8) ist trommelförmig (Trommel) ausgeführt und wird über eine Art Drehfeder (11) in eine stabile Mittellage gedrückt. An der Spitze (12) und Oberseite der Klemmnasen (6) ragt das Teil (8) gegenüber der Klemmnase (6) hervor, so daß auch bei ausgelenkter Klemmnase (6) das Teil (8) jedes Gefäß (20) unabhängig vom Durchmesser berühren kann. An einer Berührungsoberfläche (14), wenn das Teil in Mittellage ist, befindet sich vorzugsweise ein beispielsweise angespritztes elastomeres oder anderes gummiartiges Material (15).

## Beschreibung

Die Erfindung betrifft einen Halterung für Hohlgefäße nach dem Oberbegriff des Patentanspruchs 1.

Aus der DE 44 32 036 A1 ist eine Halterung für Hohlgefäße, insbesondere für Getränkegefäße bekannt, in dem ein weiter Bereich unterschiedlich geformter und bemessener Hohlgefäße sicher stehend darin gehalten werden kann. Die dazu verwendeten Ausgleichsorgane können sich so verstellen, daß sie stets an den Außenmantel des in einen Durchbruch eingesteckten Hohlgefäß angepaßt sind. Als Ausgleichsorgane sind am Stützelement angeordnete, radial in den jeweils zugeordneten Durchbruch vorstehende Lappen aus elastischem Werkstoff vorgesehen. Dieser Werkstoff kann ein Elastomer oder ein Silikonkautschuk sein.

Die EP 0 800 954 B1 beschreibt einen gattungsgemäßen Halter für einen Getränkebehälter, der Haltebacken bzw. sogenannte Klemmnasen aufweist, die Halteflächen mit unterschiedlichen radialen Abständen zu einer Mitte der Behälteraufnahme besitzen. Derartige Haltebakken bestehen bekanntlich aus einem thermoplastischen Kunststoff.

Nachteilig bei derartigen Haltern ist, daß diese die Gefäße insbesondere bei extremen Bewegungen eines Fahrzeuges, wie Rüttelstrecke oder enge Kurvenfahrten, nicht immer sicher halten können.

Die Erfindung stellt sich die Aufgabe, eine Halterung für ein Hohlgefäß zu schaffen, die auch bei extremen Bewegungen das darin befindliche Gefäß sicher zu halten vermag.

Gelöst wird die Aufgabe durch die Merkmale des Patentanspruchs 1.

Aus der Überlegung heraus, daß ein Fahrzeug einen Behälter insbesondere während der Fahrt schieben, drücken, heben nicht aber drehen kann, liegt der Erfindung die Idee zugrunde, die Entnahme eines Gefäß aus der Halterung durch Drehung des Gefäßes um eine vertikale Achse vorzunehmen, wobei ein Teil innerhalb einer Klemmnase der Halterung zur Entnahme des Gefäßes gegenüber dem Gefäß verdreht wird. Dazu weisen die Klemmnasen ein in den Klemmnasen integriertes, verdrehbares Kunststoff- oder aus ähnlichem Material bestehendes Teil auf, welches in einer axialer Lagerung der Klemmnase eingeschnappt ist.
Das Teil ist trommelförmig (Trommel) ausgeführt und wird über eine Art Drehfeder in eine stabile Mittellage gedrückt.
An der Spitze und Oberseite der Klemmnasen ragt das Teil gegenüber der Klemmnase hervor, so daß auch bei ausgelenkter Klemmnase Das Teil jedes Gefäß unabhängig vom Durchmesser berührt.
An dieser Berührungsoberfläche, wenn das Teil in Mittellage ist, befindet sich vorzugsweise ein beispielsweise angespritztes elastomeres oder anderes gummiartiges Material.

Bei einer hohen Bedienerfreundlichkeit weist die Halterung neben einer geringe Bauraumhöhe geringe radiale Klemmkräfte, aber einen hohen Reibungkoeffizienten bei gleichzeitiger sehr leichter Entnahme auf. Durch die Lage Drehachse (des Trommelteiles) und Lage der Anlegefläche am Gefäß (hohe Reibung) entsteht ein Selbsthemmungseffekt, der ein ungewolltes Bewegen bzw. Kippen des gehaltenen Gefäßes verhindert.

Der Getränkehalter kann verschiedene Gefäßdurchmesser zuverlässig halten, wobei die Entnahme als auch das Hineinstellen des Gefäßes auch während der Fahrt einfach durchzuführen ist.

Anhand eines Ausführungsbeispieles mit Zeichnung soll die Erfindung näher erläutert werden. Es zeigt
- Fig. 1: eine Halterung mit Klemmnasen,
- Fig. 2: eine vergrößerte Darstellung einer der Klemmnasen aus Fig. 1,
- Fig. 3: die Klemmnase im Schnitt A-A aus Fig. 1,
- Fig. 4: die Klemmnase im Schnitt B-B aus Fig. 3.

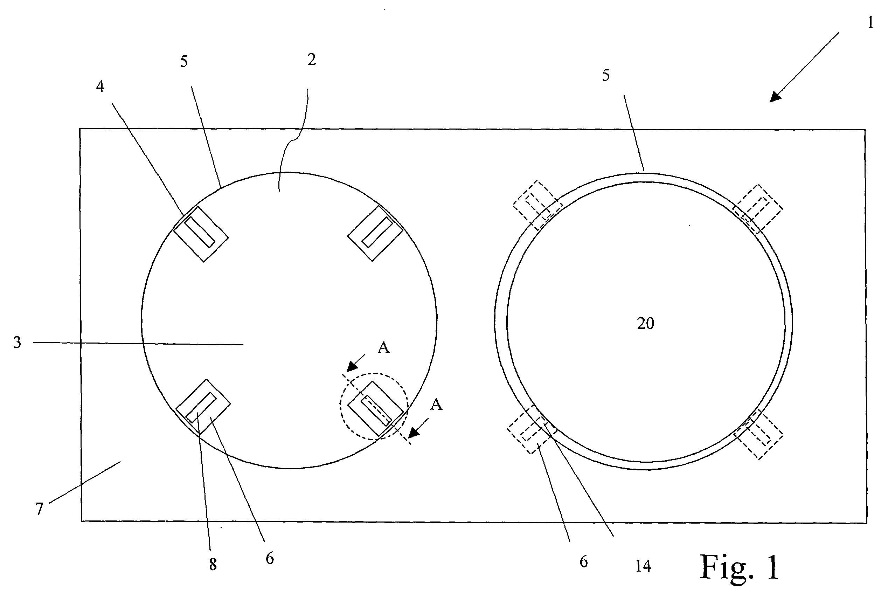

Fig. 1 zeigt die Draufsicht einer Halterung 1 für zwei Getränkebehälter 20 (Gefäß) mit je einer topfförmigen Behälteraufnahme 2 mit Bodenteil 3. In Öffnungen 4 einer Umfangswand 5 der topfförmigen Behälteraufnahme 2 sind vorzugsweise vier Klemmnasen 6 über den Umfang verteilt angeordnet, die für den funktionalen Gebrauch der Halterung 1 unter ein Gehäuse 7 der Halterung 1 radial verschwenkt werden können. Die Anzahl der Klemmnasen 6 ist variabel. Die Klemmnasen 6 zeigen zum Zentrum der Behälteraufnahme 2 und können unterschiedliche Gefäßdurchmesser halten. Die Klemmnasen 6 weisen mittig ein integriertes, verdrehbares Kunststoffteil 8, hier eine Trommel, auf, welches in eine axiale Lagerung 9 im Gehäuse 10 der Klemmnase 6 einschnappbar ist. Die Klemmnasen 6 können durch eine nicht näher dargestellte Ringfeder, einzeln oder gemeinsam betätigt werden. Es ist auch möglich, die Klemmnasen 6 über ein gleichfalls nicht dargestelltes Federelement von der Unterseite aus, beispielsweise durch eine Biegefeder oder eine Schenkelfeder, zu führen.

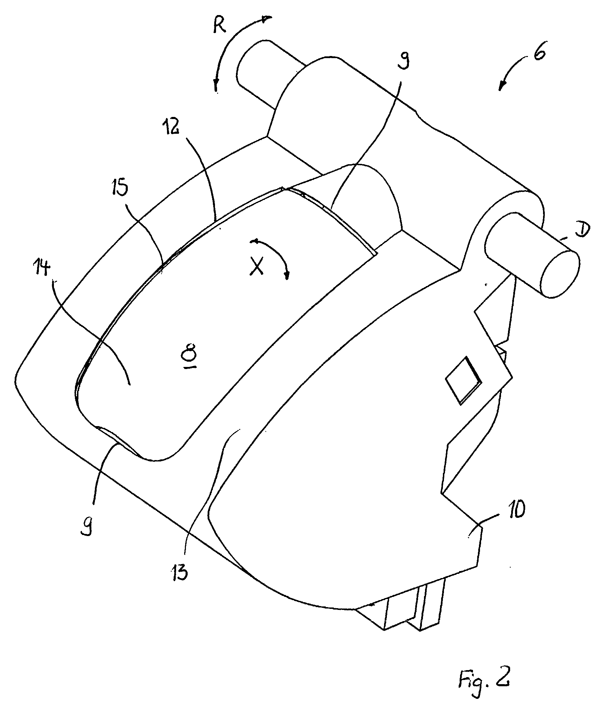

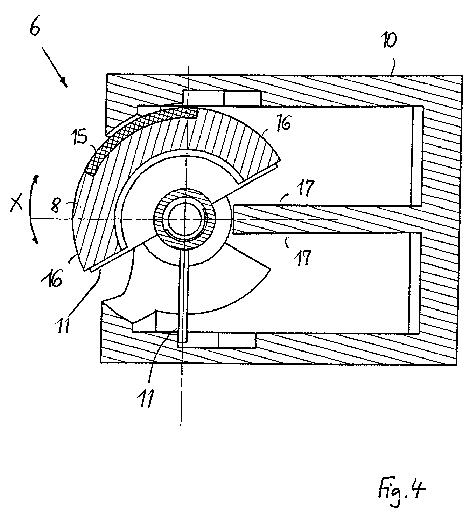

Die Klemmnasen 6 sind in der Fig. 2 detaliierter dargestellt, wobei auch die Lagerung 9 besser erkennbar ist, durch die die Trommel 8 axial in Richtung des X- Pfeiles verdreht werden kann . Die Klemmnase 6 selbst ist in Richtung des R- Pfeiles verschwenkbar. Die Trommel 8 wird durch eine Drehfeder 11 (vgl. Fig.4) in eine stabile Mittellage innerhalb eines Ausbruchs 12 des Klemmnasengehäuses 10 gehalten. An einer Spitze 13 des Gehäuses 10 ragt die Trommel 8 gegenüber dem Gehäuse 10 flächig hervor. An dieser, bei funktionalem Gebrauch des Halters 1 eine Berührungsfläche 14 bildenden Spitze 13, befindet sich eine vorzugsweise angespritzte Elastomerauflage 15. Der restliche Umfang der Trommel 8 weist eine, beispielsweise thermoplastische , härtere Oberfläche 16 auf.

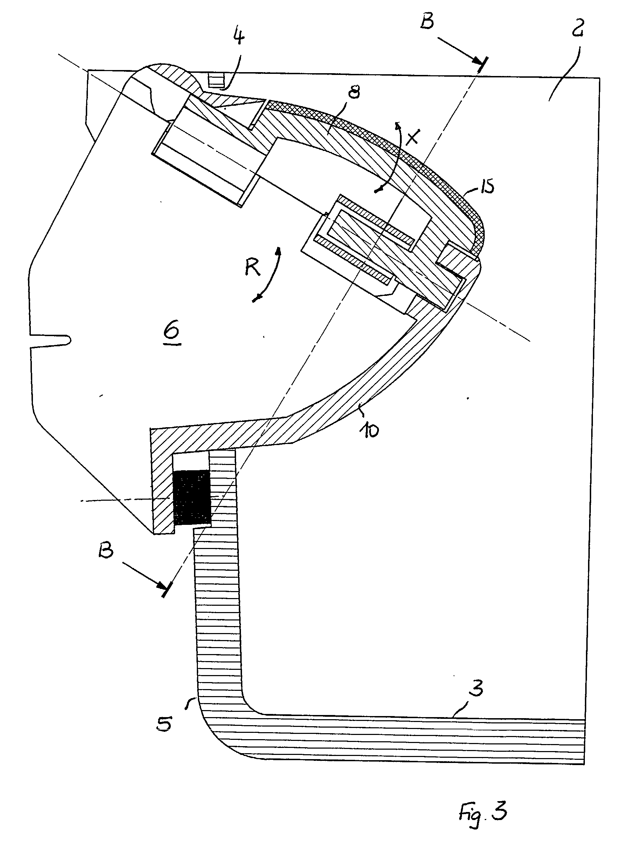

Fig. 3 zeigt die Klemmnase 6 in einer Schnittdarstellung A-A aus Fig. 1. Deutlich erkennbar ist die Lagerung einer der Klemmnase 6 in der Öffnung 4 am Umfang 5 der Behälteraufnahme 2 mit Bodenteil 3.

In einer weiteren Schnittdarstellung Fig. 4, Schnitt B-B aus Fig. 3, ist die Anbringung der Drehfeder 11, hier einer Schenkelfeder, dargestellt, deren Wirkungsweise in der folgenden Funktionsbeschreibung erläutert wird.

Die Funktionsweise ist wie folgt.

Mit Einstecken des Getränkebehälters in die Behälteraufnahme 2 werden die Klemmnasen 6 in Richtung des Pfeiles R in die Öffnungen 4 am Umfang 5 der Behälteraufnahme 2 verschwenkt. Bedingt durch die Mittellage der Elastomerauflage 15 gelangt der Behälter bzw: das Gefäß 20 mit der Elastomerauflage 15 in Eingriff, wobei die radial wirkenden Klemmnasen 6 die Elastomerauflage 15 gegen das Gefäß 20 drücken. Der Drehpunkt D (siehe Fig. 2) der Klemmnasen 6 liegt oberhalb der Berührungsfläche 14. Dadurch ist die Einsteckkraft relativ gering, obwohl die Haftreibung zwischen der Auflage 15 und dem Gefäß 20 vergleichsweise hoch ist. Durch die Elastomerauflage 15 verhaken sich die Klemmnasen 6 selbsthemmend am Gefäß 20, so daß auch bei einem großen Verhältnis von Gefäßhöhe zu Klemmhöhe das Gefäß 20 noch zuverlässig gehalten wird. Ein Verkippen wird dadurch unmöglich gemacht.

Für die Gefäßentnahme wird das Gefäß 20 selbst gedreht, wobei die Drehrichtung beliebig gewählt werden kann. Durch diese Drehung werden die in den Klemmnasen 6 integrierten Trommeln 8 und damit die Schenkelfedern 11 gedreht, wodurch statt der Elastomerauflage 15 nun die härtere Oberfläche 16 in Berührung mit dem Gefäß 20 kommt. Die Schenkelfeder 11 erreicht dabei einen Anschlag 17 im Klemmnasengehäuse 10, wodurch die Verdrehung der Trommeln 8 begrenzt wird. Alternativ bei Drehung auch die härtere Oberfläche 16 gegenüber der Klemmnase 6 wegtauchen, was dadurch erreichbar ist, daß das Kunststoffteil 8 keinen gleichmäßigen Durchmesser aufweist. Durch beide Maßnahmen wird erreicht, daß das Gefäß 20 leicht zu entnehmen ist, da die Reibung bei der Entnahme stark vermindert ist. Die Trommel 8 wird durch die Schenkelfeder 11 nach der Gefäßentnahme wieder definiert in die Mittellage zurückgedreht, was auch bei Nichtentnahme des Gefäßes 20 trotz Drehung erfolgt.

Als Getränkebehälter 20 sind eine Tasse, ein Becher, eine Getränkedose oder -flasche oder dergleichen definiert.

## Patentansprüche

1. Halterung für Hohlgefäße, mit einer Behälteraufnahme für wenigstens ein Hohlgefäß und Klemmnasen, die in die Behälteraufnahme gedrückt und in eine Umfangswand der Behälteraufnahme radial verschwenkbar sind, **dadurch gekennzeichnet, daß**
- die Klemmnasen (6) ein in den Klemmnasen (6) integriertes, verdrehbares Teil (8) aufweisen,
- welches in einer axialer Lagerung (9) der Klemmnase (6) eingeschnappt ist.

2. Halterung nach Anspruch 1, **dadurch gekennzeichnet, daß** die Klemmnasen (6) zur Aufnahme des Teiles (8) im Klemmnasengehäuse (10) einen Ausbruch (12) aufweisen.

3. Halterung nach Anspruch 1 oder 2, **dadurch gekennzeichnet, daß** das Teil (8) trommelförmig ausgeführt ist.

4. Halterung nach einem der Ansprüche 1 bis 3, **dadurch gekennzeichnet, daß** das Teil (8) über eine Drehfeder (11) in eine stabile Mittellage gedrückt wird.

5. Halterung nach einem der Ansprüche 1 bis 4, **dadurch gekennzeichnet, daß** das Teil (8) gegenüber einer Spitze (12) und Oberseite der Klemmnasen (6) hervorragt, so daß auch bei ausgelenkter Klemmnase (6) das Teil (8) jedes Gefäß (20) unabhängig vom Durchmesser berühren kann.

6. Halterung nach einem der Ansprüche, **dadurch gekennzeichnet, daß** an einer Berührungsoberfläche (14), wenn das Teil (8) in Mittellage ist, sich eine Elastomerauflage (15) oder ein anderes gummiartiges Material befindet.

7. Halterung nach einem der Ansprüche, **dadurch gekennzeichnet, daß** die Entnahme des Gefäßes durch Drehen des Gefäßes (20) erfolgt.

8. Halterung nach einem der Ansprüche, **dadurch gekennzeichnet, daß** bei Drehung des Gefäßes (20) statt der Elastomerauflage (15) eine härtere Oberfläche (16) des Teils (8) in Berührung mit dem Gefäß (20) kommt.
